# EUROPEAN PATENT SPECIFICATION

(11) **EP 3 593 247 B1**
(45) Date of publication and mention of the grant of the patent: **16.11.2022**
(21) Application number: 18790997.3
(22) Date of filing: 13.04.2018
(51) Int. Cl.: G06F 9/50, G06N 20/20, H04L 67/104

(54) **TRAINING MACHINE LEARNING MODELS ON A LARGE-SCALE DISTRIBUTED SYSTEM USING A JOB SERVER**
TRAINIEREN VON MODELLEN DES MASCHINELLEN LERNENS AUF EINEM GROSSSKALIGEN VERTEILTEN SYSTEM MITHILFE EINES JOB-SERVERS
ENTRAÎNEMENT DE MODÈLES D'APPRENTISSAGE AUTOMATIQUE SUR UN SYSTÈME DISTRIBUÉ À GRANDE ÉCHELLE À L'AIDE D'UN SERVEUR DE TÂCHES

(30) Priority: 26.04.2017 US 201715497749
(43) Date of publication of application: 15.01.2020
(73) Proprietor: Midea Group Co., Ltd., Foshan, Guangdong 528311 (CN)
(72) Inventor: CHEN, Xin, San Jose, CA 95134 (US); ZHOU, Hua, San Jose, CA 95134 (US); WANG, Dongyan, Foshan Guangdong 528311 (CN)
(74) Representative: Lam, Alvin
(86) International application number: PCT/CN2018/082970
(87) International publication number: WO 2018/196631

(56) References cited:
- CN-A- 102 073 546
- CN-A- 102 523 249
- CN-A- 105 069 703
- CN-A- 105 575 119
- US-A1- 2013 290 223
- US-B1- 7 596 788
- MART\'IN ABADI ET AL: "TensorFlow: Large-Scale Machine Learning on Heterogeneous Distributed Systems", ARXIV.ORG, CORNELL UNIVERSITY LIBRARY, 201 OLIN LIBRARY CORNELL UNIVERSITY ITHACA, NY 14853, 14 March 2016 (2016-03-14), XP080689634,
- REZA SHOKRI ET AL: "Privacy-Preserving Deep Learning", PROCEEDINGS OF THE 22ND ACM SIGSAC CONFERENCE ON COMPUTER AND COMMUNICATIONS SECURITY, CCS '15, 2 January 2015 (2015-01-02), pages 1310-1321, XP055538794, New York, New York, USA DOI: 10.1145/2810103.2813687 ISBN: 978-1-4503-3832-5

## Description

### BACKGROUND

### 1. Field of the Invention

This disclosure relates generally to a method for training a plurality of machine learning and, more particularly, to a method of training a plurality of learning models in a computer system, a computer-program product for implementing said method, and and a computer system for training a plurality of learning models.

### 2. Description of Related Art

Modern deep learning architectures trained on large-scale datasets can obtain impressive performance across a wide variety of domains, including speech and image recognition, image segmention, image/video understanding and analysis, natural language processing, and various applications such as fraud detection, medical systems, and recommendation systems. However, training these machine learning models is computationally demanding. The training can take an impractically long time on a single machine.

Therefore, the task of training a machine learning model may be assigned to be performed by a distributed system that includes multiple machines. However, this introduces its own problems. Training involves a large amount of data. The training set typically contains a large number of training samples, each of which can be quite large such as an image, video, text, or audio. The machine learning model itself can also be quite large, with a large number of layers and a large number of parameters (e.g., weights, biases, and so on) to be trained. Current approaches to training typically assign a single machine (a parameter server) to keep the master version of the parameters of the machine learning modelmodel and to synchronize the parameters and update them for the entire training task. As a result, a large volume of data is communicated between the parameter server and the other machines and the required communication bandwidth can be very significant when training large-scale models on a large-scale distributed system.

If it is desired to efficiently and effectively train multiple machine learning models or to train one model on multiple machines in a large-scale distributed system simultaneously, then the required communication bandwidth increases even more and the parameter server quickly becomes a bottleneck to training. As a result, either a significant investment in communication bandwidth is required or, if communication bandwidth is limited, then the overall training capacity will also be limited.

Therefore, there is a need for improved approaches to training machine learning models on a large-scale distributed system.

*"*TensorFlow: Large-Scale Machine Learning on Heterogeneous Distributed Systems" by Abadi M. et. al. In: Arxiv.org, Cornell University Library, 201 Olin Library Cornell University Ithaca, NY 14853 discusses an interface for expressing machine learning algorithms, and an implementation for executing such algorithms. *"*Privacy-Preserving Deep Learning" by Shokri R. et. al. In: Proceedings of the 22nd ACM SIGSAC Conference on Computer and Communications Security, CCS, January 2015 discusses a practical system that enables multiple parties to jointly learn an accurate neuralnetwork model for a given objective without sharing their input datasets. US 2013/0290223 A1 discusses methods, systems, and programming for distributed computing. Particularly, it is directed to methods, systems, and programming for distributed machine learning on a cluster

### SUMMARY

In accordance with the present invention, there is provided a method for training a plurality of machine learning models in a computer system as set out in claim 1, a computer-program product as set out in claim 11 for implementing said method, and a computer system for training a plurality of machine learning models as set out in claim 12. Other aspects of the invention can be found in the dependent claims. Any embodiment referred to and not falling within the scope of the claims is merely an example useful to the understanding of the invention.

### BRIEF DESCRIPTION OF THE DRAWINGS

Embodiments of the disclosure have other advantages and features which will be more readily apparent from the following detailed description and the appended claims, when taken in conjunction with the accompanying drawings, in which:
FIG. 1 is a block diagram of a large-scale distributed computer system including a job server, in accordance with the invention.
FIGS. 2A-2C are block diagrams of training groups having different architectures, in accordance with the invention.
FIG. 3 illustrates operation of a job server, in accordance with the invention.
FIG. 4 is a block diagram of another computer system including a job server, in accordance with the invention.
FIG. 5 is a block diagram of a job server, in accordance with the invention.
FIG. 6 is a block diagram of a compute node, in accordance with the invention.

The figures depict various embodiments for purposes of illustration only. One skilled in the art will readily recognize from the following discussion that alternative embodiments of the structures and methods illustrated herein may be employed without departing from the principles described herein.

### DETAILED DESCRIPTION OF THE PREFERRED EMBODIMENTS

The figures and the following description relate to preferred embodiments by way of illustration only. It should be noted that from the following discussion, alternative embodiments of the structures and methods disclosed herein will be readily recognized as viable alternatives that may be employed without departing from the principles of what is claimed.

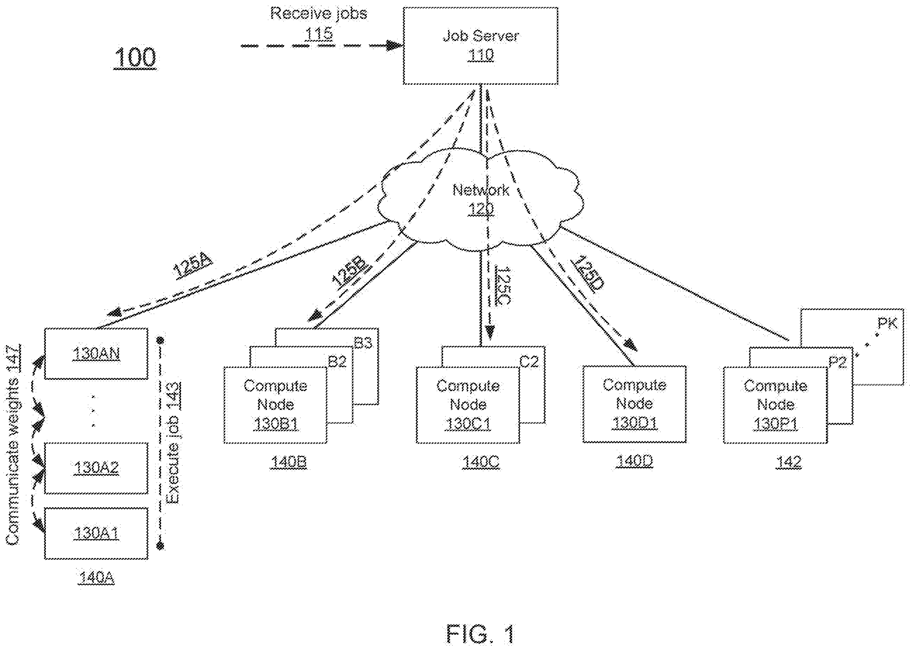

FIG. 1 is a block diagram of a large-scale distributed computer system 100 including a job server 110, in accordance with the invention. The computer system 100 also includes compute nodes 130, and a network 120 that connects the different components. A typical large-scale distributed computer system preferably has 1,000 or more processor units (e.g., CPUs and GPUs) distributed between the job server 110 and the compute nodes 130, although the actual number will vary depending on the situation and the technology used. The computer system 100 is capable of training multiple machine learning models simultaneously, by allocating the training jobs to different groups 140 of compute nodes, as will be described in more detail below. FIG. 1 shows compute nodes 130 organized into four training groups: 140A-D. Training group 140A includes compute nodes 130A1-130AN. Similar numbering is used for training groups 140B, 140C and 140D. Note that group 140D includes only a single compute node 130D1. The allocation of compute nodes 130 to training groups 140 will be described in more detail below. Unused compute nodes 130P form a pool 142 of available compute nodes.

The computer system 100 is used to train machine learning models. Examples of machine learning models include convolutional neural networks (CNNs), recurrent neural networks (RNNs), neural networks, and support vector machines.

In a typical training job, the machine learning model has an architecture with a certain number of layers and nodes, with weighted connections between nodes. Training the machine learning model typically includes determining the values of the parameters (e.g., weights and biases) of the model, based on a set of training samples. In supervised learning, the training samples are pairs of inputs and known good outputs (aka, ground truth). An input is presented to the machine learning model, which then produces an output, such as whether the input exhibits a target attribute or a confidence level that the input exhibits the target attribute. The difference between the machine learning model's output and the known good output is used to adjust the values in the model. This is repeated for many different training samples until the performance of the machine learning model is satisfactory. The process of determining whether the machine learning model is adequately trained is referred to as validation. Once trained, when a new input is presented, the machine learning model can satisfactorily predict the correct output. Machine learning models can be continuously training, even while being used in active operation. Other types of machine learning methods include semi-supervised learning, unsupervised learning and reinforcement learning.

In the overall system, the job server 110 plays more of a role of managing and monitoring the allocation of training jobs to the compute nodes 130, and the compute nodes 130 play more of a role of executing the training tasks. These components 110, 130 include some sort of processing power and data storage (possibly shared), although the actual implementations can vary widely. For example, the processing power can be provided by conventional central processing units (CPUs), graphics processing units (GPUs), special purpose processors, custom ASICs, multi-processor configurations, and chips designed for training and inference. These components may also be implemented as actual physical components (e.g., blade servers) or through virtualization. The components 110, 130 also are not required to be all the same. For example, different compute nodes 130 may have different capabilities or may be specialized for certain tasks.

The network 120 provides connectivity between the different components. The term "network" is intended to be interpreted broadly. It can include formal networks with standard defined protocols, such as Ethernet and InfiniBand. However, it also includes other types of connectivity between components, such as backplane connection on a server rack, remote direct memory access (RDMA), and high performance computing fabric frameworks. The "network 120" can also combine different types of connectivity. It may include a combination of local area and/or wide area networks, using both wired and/or wireless links. Data exchanged between the components 110, 130 may be represented using any suitable format. In some embodiments, all or some of the data and communications may be encrypted.

Accordingly, the overall computer system 110 can be implemented in different ways. For example, it can be implemented entirely as a proprietary system. Alternately, it may be built on third party services or cloud offerings.

The dashed arrows in FIG. 1 illustrate operation of the computer system 100. In this example, the computer system 100 has a master-worker architecture, where the job server 110 operates as a master of each of the training groups 140 and each training group operates as a worker for the job server. The job server 110 receives 115 jobs to train machine learning modules. It allocates 125A-D the jobs to groups of compute nodes 130, which will be referred to as training groups 140A-D. Training job 125A is allocated to the compute nodes 130Ax in training group 140A, training job 125B is allocated to the compute nodes 130Bx in training group 140B, and so on. Preferably, the job server 110 also determines which compute nodes 130 are included in which training groups 140.

The job server 110 allocates the training jobs based on the current requirements of the training jobs and the current status of the compute nodes 130. Upon allocating a job to a training group, in one embodiment, the job server 110 also transmits the initial set of parameters of the model (and/or other aspects of the training job) to the training group. Alternately, the job server 110 may not physically transmit the parameters to the training group but may provide pointers to the parameters or otherwise communicate the initial values to the training group. When training is completed, the final values of the parameters may or may not be transmitted to the job server 110. Interim values of the parameters preferably are not transmitted to the job server 110 and the job server 110 preferably does not carry out training calculations. However, the job server 110 typically will monitor each training group's progress and may access interim values of the parameters for display or monitoring purposes.

In this example, each training job is to train a different machine learning model, including adaptation of the parameters for the model. Thus, training group 140A trains machine learning model A, training group 140B trains a different machine learning model B, and so on. The training jobs may be ordered 115 at different times. Accordingly, the allocation 125A-D of the training jobs may occur over time.

The compute nodes 130 in each training group 140 work together to execute 143 their allocated training job. This includes calculating 143 updated values of the parameters for the model and communicating 147 these updated parameters among themselves. Take the training group 140A as an example. The compute nodes 130A1-N in the training group execute a training job to train a machine learning model A. As part of this job, different portions of the training set may be allocated to different compute nodes 130Ax, each of which then trains 143 using its training samples. The compute nodes 130Ax produce 143 updated values of the parameters based on their training, and these values are communicated 147 between the compute nodes in order to aggregate the training from all compute nodes 130Ax. The calculation of interim values and final values of the parameters preferably is performed by the compute nodes 130 in the training group. One or more of the compute nodes 130 can also provide local control and monitoring of execution of the training job by the training group.

The job server 110 allocates 125 training jobs to training groups of one or more compute nodes 130 based on current requirements of the training jobs and current status of the compute nodes 130. Examples of training requirements include requirements on computing power, data storage, communication bandwidth and/or special capabilities. The size of a training job often depends on factors such as the number of training samples and the size of the training samples, the size of the machine learning model and the number of parameters in the model, and the effectiveness of the training algorithm.

The status of the compute nodes can include both the node's capabilities and the node's availability. These can also be measures of computing power, data storage, communication bandwidth and/or special capabilities. Indicators of computing power include the number of processors or processor cores, the type and power of the processors, processing throughput rate (e.g., flops rating), clock speed. Indicators of data storage include types and amount of data storage, read/write bandwidth, access time, preloading capacity, number of low memory warnings, and elapsed time since the last low memory warning. Factors such as bandwidth for other connections (e.g., PCI express), and motherboard topology such as NUMA and SMP will also impact data transfer. Indicators of communication bandwidth include types and numbers of network connections, rate of data transfer (e.g., an average of recent data transfer rates), network connection reliability (e.g., probability of network connection availability based on recent connectivity), and latency for data transfer.

In one embodiment, the job server 110 classifies the compute nodes 130 into different classes based on their capabilities. For example, some of the compute nodes 130 may have more processing power or a larger memory or special capabilities compared to the rest of the compute nodes 130. These might be classified as "Special" while the rest are classified as "Regular." Each class may have further specifications. For example, the "Regular" compute nodes might include numbers to indicate processing power and memory capacity.

In some embodiments, the availability of the compute nodes 130 is classified as "Available," "Partially Available" and "Unavailable." For example, a compute node not executing any training job is Available, a compute node executing a training job but not at 100% capacity is Partially Available, and a compute node executing a training job using all of its capacity is Unavailable. In another approach, availability is indicated by a number, for example ranging from 0 to 1, or from 0 to 100. The job server 110 can use the different classifications to determine how many and which compute nodes are allocated to each training job.

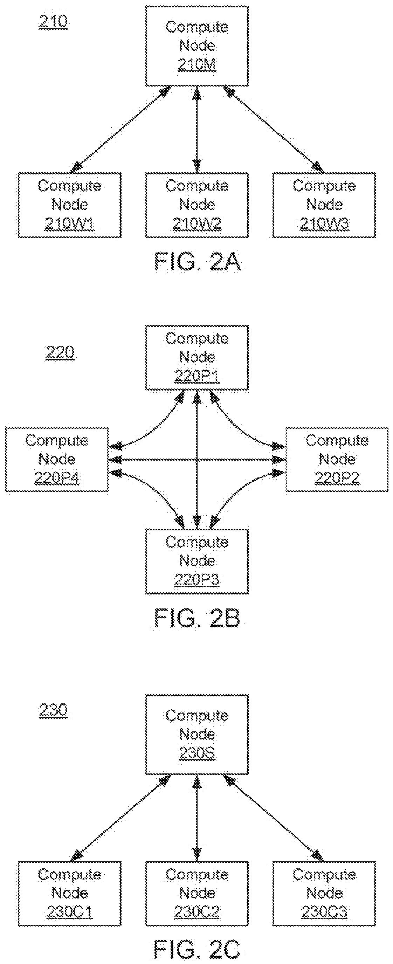

FIG. 1 shows different compute nodes 130 assigned to different training groups 140, but does not show the internal architecture of each training group. Different training groups 140 can use different architectures. They do not all have to use the same architecture. The job server 110 may specify an architecture for a training group, or a training group may already be organized according to an architecture, or an architecture may be selected once the training group receives the training job. FIGS. 2A-2C are block diagrams of training groups having a master-worker architecture, a peer-to-peer architecture and a client-server architecture, respectively.

FIG. 2A is a block diagram of a training group 210 having a master-worker architecture. The training group 210 has four compute nodes 210M and 210W1-3. The compute node 210M functions as the master and the compute nodes 210W1-3 function as workers. The master 210M generally controls workflow for the workers 210W. In this example, the master 210M receives the training job, partitions the training job into smaller tasks to be completed by each worker 210W, and updates the values of the parameters for the machine learning model. The master 210M may store the initial values of the parameters and then update those values as it receives interim training results from the workers 210W. In one approach, the master 210M stores the parameters in its local memory and transmits these values to the workers 210W as needed. Alternately, the parameters could be stored in a memory shared by the compute nodes 210M and 210W.

In one embodiment, the training job includes a set of training samples and the master 210M partitions the training job into smaller tasks by assigning subsets of training samples to different workers 210W. For example, if the training job includes 300,000 training samples, the master 210M could assign 100,000 training samples to each worker 210W. The master 210M may not assign the same number of training samples to each worker. It could assign the training samples to the workers 210W based on their status. For example, the master might partition the training job into 10 blocks of 30,000 training samples each. It might then assign the first three blocks of 30,000 training samples to the workers 210W1-3 and then assign the remaining blocks as workers 210W become available. The master 210M itself may also perform some training.

In an alternate partitioning, the machine learning model can be subdivided into different components and the master 210M partitions the training job by assigning different model components to different workers 210W. For example, if the model is separable, some workers 210W might train earlier layers in the model and others might train later layers in the model. Alternately, some model components may be designed to detect certain features and those might be trained separately.

FIG. 2B is a block diagram of a training group 220 with four compute nodes 220P1-4 arranged in a peer-to-peer architecture. The training group 220 uses a distributed algorithm to partition the training job into smaller tasks executed by the peers 220P. The peers 220P coordinate with each other with respect to executing the tasks and updating the parameters for the machine learning model. For example, if the training job is partitioned into 10 tasks, each peer 220P may update a shared master set of parameters after it completes its current task and then may go to a common queue to fetch the next available task.

A hybrid approach can also be used. For example, one compute node 220P1 might function as the single point of contact with the job server 110. That compute node 220P1 receives the training job from the job server and makes the initial partition of the training job into smaller tasks. It may also assign initial tasks to the other computer nodes 220P. However, the compute nodes 220P then act as peers with respect to executing the tasks and updating the parameters for the machine learning model. The primary compute node 220P1 may maintain the master set of parameters and also the queue of pending tasks.

FIG. 2C is a block diagram of a training group 230 having a client-server architecture The compute node 230S operates as a server and the compute nodes 230C1-3 operate as clients. The server 230S provides training samples. The clients 230C retrieve the training samples from the server 230S and execute their training tasks. The server 230S can also function to provide values of the parameters to the clients 230C and to update the values of the parameters based on the training results from the clients 230C.

As mentioned previously, the job server 110 allocates training jobs to groups of compute nodes. For convenience, these groups are referred to as training groups. The job server 110 preferably determines which compute nodes are included in which training groups. This can change over time in response to changes in the current requirements of the training jobs and/or the current status of the compute nodes.

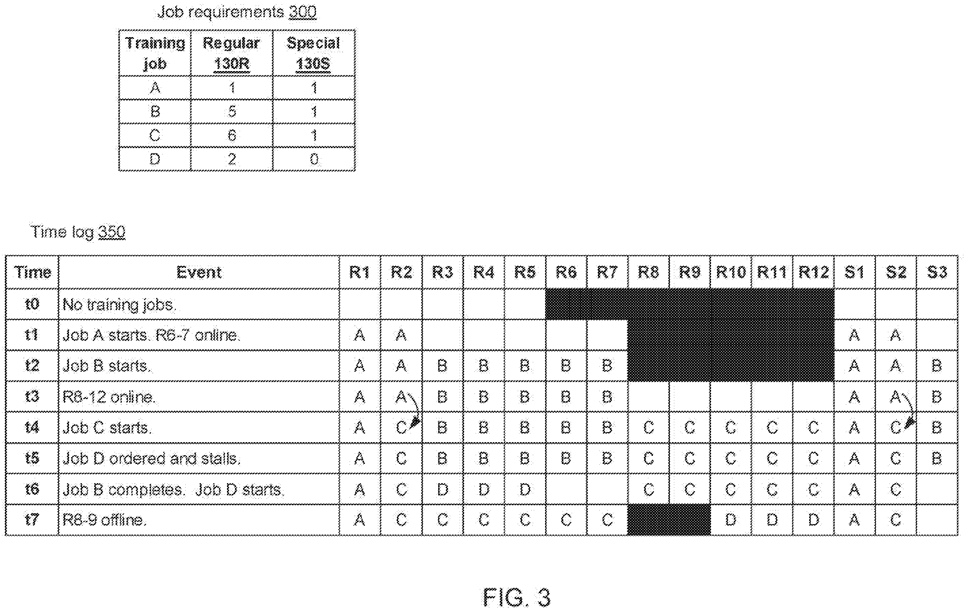

FIG. 3 illustrates an example of a job server allocating training jobs to compute nodes. In this example, there are up to 15 compute nodes, including 12 regular compute nodes 130R1-R12 and three special compute nodes 130S1-S3. The job server 110 receives four training jobs A-D to be executed by the compute nodes. Table 300 shows the requirements for each training job. Training job A requires 1 regular compute node 130R and 1 special compute node 130S, and so on. In this example, these are minimum requirements. More than this number of compute nodes can be used, but not less. Job requirements can also be specified in other ways: by ranges, by min and max, by recommended, by tolerances, and so on.

The training jobs are ordered at different times. As the job server 110 receives a training job, the job server 110 allocates the training job to compute nodes 130 based on the current requirements of the training jobs and the current status of the compute nodes 130. Table 350 is a time log showing the allocation of training jobs to compute nodes over time. In Table 350, a compute node 130 that is assigned to a job is marked with the job letter, a compute node that is on-line and available is marked with a blank cell, and a compute node that is off-line is marked with a diagonal striped pattern. In the present invention, the computer system is capable of some level of dynamic reallocation. That is, the compute nodes assigned to a training job can be changed while the training job is executing. However, in an unclaimed example, the use of a job server can also be applied to a static situation where the training group is fixed and must remain the same from the beginning to the end of the job. In that case, the allocation policy will be modified based on this additional constraint.

At time t0, five regular nodes R1-R5 and three special nodes S1-S3 are on-line and available, but no training jobs have been received yet. Nodes R6-R12 are off-line, as indicated by the diagonal striped pattern. At time t1, training job A is ordered and starts. Job A requires one regular node R and one special node S, but the job server 110 allocates the training job to two regular nodes R1-2 and two special nodes S1-2. The remaining compute nodes R3-5 and S3 are available for future jobs, and two more compute nodes R6-7 have come on-line.

Training job A is allocated to more compute nodes 130 than it requires because there are a lot of computing resources available at time t1. Accordingly, it takes less time to complete training job A. At the same time, not all available computing resources are assigned to training job A because other training jobs are expected in the near future. For example, the jobs may be scheduled in advance or the demand for future jobs may be predicted based on past history. In an alternate approach, job A could be allocated to the minimum required compute nodes. This may be appropriate if it is difficult to switch compute nodes in the middle of a job, or if a large number of jobs are expected before the current job completes. In the opposite approach, job A could be allocated to all available compute nodes, with dynamic reallocation as new jobs are ordered.

At time t2, training job B starts while job A is still being executed. The job server 110 assigns training job B to the required minimum of five regular nodes R3-7 and one special node S3. Thus, the computing resources of the training group are the same as the requirements for the job. At the same time, the regular nodes R1-2 and special node S1-2 continue to execute training job A. At time t2, there are no idle compute nodes.

At time t3, additional nodes R8-12 come on-line. There is no allocation of these nodes to either existing jobs A or B, which continue to execute the same as before. At time t4, training job C is ordered. However, training job C requires six regular nodes 130R and one special node 130S, but there are only five regular nodes R8-12 and no special nodes available. The currently available computing nodes are insufficient to meet the requirements of job C. The job server 110 dynamically reallocates nodes R2 and S2 from job A to job C, as shown by the arrows between the rows for times t3 and t4. This still meets the minimum required by job A, while freeing up resources to meet the required minimum for job C. Training job B is still executed by the same compute nodes, because the training group for training job B does not have excess compute nodes. The available pool now has no compute nodes.

At time t5, training job D is ordered. However, there are no available compute nodes so job D does not start execution. It must wait for one of the other jobs to complete. At time t6, job B completes, freeing up nodes R3-R7 and S3. The job server allocates job D to nodes R3-R5. This is basically a first come, first serve approach.

In alternate embodiments, when the computer system is oversubscribed, the job server 110 may allocate resources to training jobs based on priority. If job D was higher priority than job C, then at time t5, the job server would dynamically reallocate compute nodes from job C to job D. Priority of training jobs can be determined by various factors including urgency of the training jobs, importance of the training jobs, time of period required to execute the training jobs. In an alternate approach, the allocation may be on a prorated basis.

At time t7, compute nodes R8-9 go offline unexpectedly. As a result, job C no longer has the required number of compute nodes. However, compute nodes R6-7 are available, so those could be allocated to job C. In this example, job C is reallocated to nodes R3-7 and job D is moved to nodes R10-12. This might be done, for example, if nodes R3-7 are in one data center and nodes R8-12 are in a different data center. This way, all regular nodes assigned to a job are in the same data center.

In the above examples, the job server 110 was primarily responsible for managing execution of the training jobs, while the compute nodes 130 were primarily responsible for the computation required in the training jobs and also updating and communicating parameters for the machine learning models. In some embodiments, the job server 110 also performs other functions. For example, the job server may monitor the training groups' execution of their allocated training jobs and/or the status of the compute nodes 130. The job server 110 may also provide a visual display of the parameters of the training jobs and/or status of the compute nodes 130.

In one implementation, the job server 110 provides a visual display in which available compute nodes are marked with green icons versus red icons for unavailable compute nodes and yellow icons for partially available compute nodes. The visual display can also show the internal architecture of the training groups and/or their level of activity. A user of the computer system 100 can use the visual display to control progress of the training jobs and determine whether to send new training jobs to the job server 110.

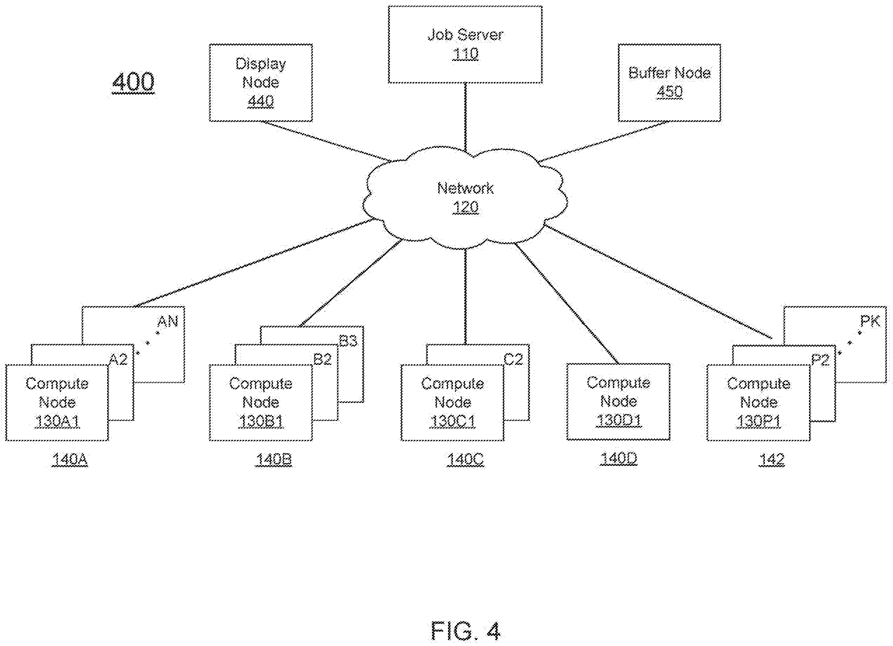

FIG. 4 is a block diagram of another computer system 400, in accordance with the invention. In addition to the components shown in FIG. 1, the computer system 400 also includes a display node 440 and a buffer node 450. As described above, the job server may provide various visual displays, such as displays that monitor the progress of training jobs, that illustrate the parameters as they are trained, that show capacity of the overall computer system. In FIG. 4, those functions are performed by the display node 440.

The buffer node 450 buffers data to be used in a next training job to be executed by the compute nodes 130. For example, the job server 410 pre-loads data (e.g., training samples, initial values of parameters of the model) to the buffer node 450. The compute nodes 130 then access the data from the buffer node 450. The buffer node 450 provides a sort of caching function for the system as a whole, thus increasing overall system performance.

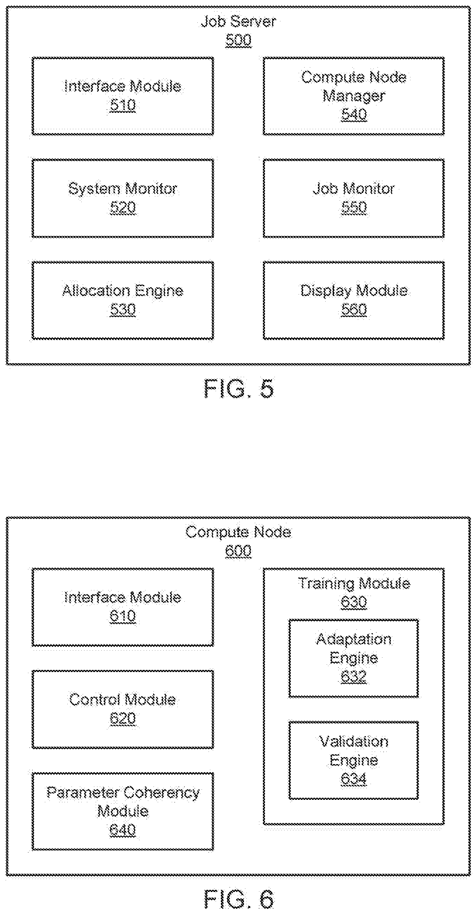

FIGS. 5 and 6 are block diagrams of examples of a job server and a compute node, respectively. The components shown refer to computer program instructions and other logic used to provide the specified functionality. These components can be implemented in hardware, firmware and/or software. In one embodiment, they are implemented as executable computer program instructions that are stored on a storage device, loaded into a memory and executed by a processor.

In FIG. 5, the job server 500 includes an interface module 510, a system monitor 520, an allocation engine 530, a compute node manager 540, a job monitor 550, and a display module 560. It may also include data storage for information about the computer system and about the training jobs, including training samples and parameters for the machine learning models.

The interface module 510 facilitates communication with other devices and/or users. Training jobs are received via the interface module 510 and instructions for the compute nodes are dispatched via the interface module 510. Data transfer also occurs via the interface module 510. The interface module 510 can include a user interface.

The system monitor 520 monitors the status (capability and/or availability) of the compute nodes. The system monitor 520 may include functionality to auto-discover the capabilities of the compute nodes in terms of computing power, storage and communication. The system monitor 520 also determines which compute nodes are on-line, and whether they are available, partially available or unavailable.

The allocation engine 530 determines requirements of training jobs and allocates the training jobs to compute nodes based on the requirements of the training jobs and status of the compute nodes. In one embodiment, the allocation engine 530 determines how many compute nodes are required by each training job and also looks into how many compute nodes are available or partially available. It allocates the training jobs to compute nodes accordingly. The allocation of training jobs, including reallocation, is done dynamically.

The compute node manager 540 provides the logic for controlling and instructing the compute nodes. It generates instructions for the compute nodes to execute training jobs. The instructions can include a description of the machine learning model of the training job (e.g., ID, purpose, mathematical algorithm, and initial values of the parameters), location of the training samples for the training job, and information about the other compute nodes in the training group.

Depending on the amount of control by the job server over the compute nodes, the compute node manager 540 may also manage other aspects. For example, instructions can additionally define the architecture of the training group, such as identifying which compute node in the training group is a master and which ones are workers. Also, the instruction can specify partitioning of the training job between the compute nodes in the training groups. In some embodiments, the instruction specifies the communication of updated values of the parameters between the compute nodes. For example, the instructions might specify that a particular compute node is to receive updated values from the other compute nodes in the training group, that compute node will reconcile the training results and produce an updated set of parameters and then send the updated values back to the other compute nodes for further training.

The job monitor 550 monitors progress of the various training jobs. It may query for progress reports, or training groups may self-report their progress.

The display module 560 provides displays of information related to execution of the training jobs and/or status of the computer system. In one embodiment, the display module 560 displays status of the compute nodes. The user can determine whether to send more training jobs to the computer system or to specific nodes based on the displayed status. In another embodiment, the display module 560 displays values of the parameters of the machine learning models. For example, the display module 560 might display the initial values and final values of the parametes of a machine learning model. The display module 560 might also display updated values of the parameters as the training progresses.

In FIG. 6, the compute node 600 includes an interface module 610, a control module 620, a training module 630, and a parameter coherency module 640. It may also include data storage, for example to store the parameters of models, statistical parameters of training sets, progress of the model training, and other information. The interface module 610 facilitates communication with other devices and/or users. For example, training jobs and instructions from the job server are received via the interface module 610. So are communications from and to the other compute nodes, including parameters used in training.

The control module 620 provides the logic for controlling the compute node, including the interaction with the job server and with the other compute nodes. It is partially a counterpart to the compute node manager 540 in the job server.

The training module 630 executes training jobs. In this example, the training module 630 includes an adaptation engine 632 and a validation engine 634. The training module 630 uses training samples to train the machine learning model. In one approach, the training module 630 forms a positive training set of training samples that have the target attribute in question and a negative training set of training samples that lack the target attribute in question. The adaptation engine 632 updates values of the parameters of the machine learning module to fit the positive training set and the negative training set. Different machine learning techniques - such as linear support vector machine (linear SVM), boosting for other algorithms (e.g., AdaBoost), neural networks, logistic regression, naive Bayes, memory-based learning, random forests, bagged trees, decision trees, boosted trees, or boosted stumps - may be used in different embodiments.

The validation engine 634 validates the trained machine learning model based on additional samples. The validation engine 634 applies the trained model to the validation samples to quantify the accuracy of the trained model. Common metrics applied in accuracy measurement include Precision = TP / (TP + FP) and Recall = TP / (TP + FN), where TP is the number of true positives, FP is the number of false positives and FN is the number of false negatives. Precision is how many outcomes the trained model correctly predicted had the target attribute (TP) out of the total that it predicted had the target attribute (TP + FP). Recall is how many outcomes the trained model correctly predicted had the attribute (TP) out of the total number of validation samples that actually did have the target attribute (TP + FN). The F score (F-score = 2 ^{∗} Precision^{∗}Recall / (Precision + Recall)) unifies Precision and Recall into a single measure. Common metrics applied in accuracy measurement also include Top-1 accuracy and Top-5 accuracy. Under Top-1 accuracy, a trained model is accurate when the top-1 prediction (i.e., the predicton with the highest probablity) predicted by the trained model is correct. Under Top-5 accuray, a trained model is accurate when one of the top-5 predictons (e.g., the five predictions with highest probablities) is correct. The validation engine 634 may use other types of metrics to quantify the accuracy of the trained model. In one embodiment, the training module 630 iteratively re-trains the machine learning model until the occurrence of a stopping condition, such as the accuracy measurement indication that the model is sufficiently accurate, or a number of training rounds having taken place.

The parameter coherency module 640 aggregates the training results from different compute nodes. For example, the training on one compute node may create one set of updated values for the parameters, and the training on another compute node may create a different set of updated values. The parameter coherency module 640 combines these results into a single set of updated values.

Various other modifications, changes and variations which will be apparent to those skilled in the art may be made in the arrangement, operation and details of the method and apparatus of the present invention disclosed herein without departing scope of the invention as defined in the appended claims. Therefore, the scope of the invention should be determined by the appended claims.

## Claims

1. A method for training a plurality of machine learning models in a computer system, wherein each machine learning model comprises a set of parameters, the method comprising:
receiving, by a job server (110; 500) in communication with a plurality of compute nodes (130; 600) over a network (120), a plurality of training jobs, , including a first training job and a second training job, for training the machine learning models;
allocating, by the job server, each training job to a respective training group (140) of one or more of said compute nodes (130;600) based on current requirements of the training jobs and current status of the compute nodes, including the job server determining which compute nodes are included in which training group; and
executing, by the training groups, their allocated training jobs, said execution comprising updating values for the parameters of the machine learning models;
the method further **characterised by**:
in response to determining that currently available computing nodes are insufficient to meet the requirements of the second training job, dynamically reallocating, by the job server, compute nodes currently allocated to and executing the first training job from the first training job to the second training job while the first training job is executing, in such a way to still meet a minimum required by said the first training job, while freeing up resources to meet a required minimum for said second training job; and
communicating, by at least one of the training groups that comprises two or more compute nodes, the updated values of the parameters between said two or more compute nodes of said at least one of the training groups; and
said at least one of the training groups using the communicated updated values in furtherance of the respective training job.

2. The method of claim 1, wherein the computer system has a master-worker architecture, wherein the job server operates as a master for each of the training groups and each training group operates as a worker for the job server.

3. The method of claim 2, wherein at least one of the training groups with two or more compute nodes also has a master-worker architecture within the training group, wherein one of the compute nodes in the training group operates as a master for a remainder of the compute nodes in the training group and the remainder of the compute nodes operate as workers for the one compute node.

4. The method of claim 2, wherein at least one of the training groups with two or more compute nodes has a peer-to-peer architecture within the training group.

5. The method of claim 2, wherein for at least one of the training groups with two or more compute nodes: the training job begins with initial values for the parameters and ends with final values for the parameters, and updating of the parameters from the initial values to the final values is performed and stored by one of the compute nodes in the training group.

6. The method of claim 1, further comprising:
the job server changing which compute nodes are included in which training group based on current requirements of the training jobs and current status of the compute nodes.

7. The method of claim 1, wherein allocating the training jobs to training groups based on current status of the compute nodes comprises allocating the training jobs to training groups based on current capability of the compute nodes and on current availability of the compute nodes.

8. The method of claim 1, wherein the job server allocates the training jobs to training groups based on one or more of: computing capability, availability of the compute nodes, data storage capability, availability of the compute nodes, and communications capability.

9. The method of claim 1, wherein, for the at least one training group, the job server specifies the communications of the updated values between compute nodes.

10. The method of claim 1, wherein the training jobs begin with initial values for the parameters, progress through interim values of the parameters and end with final values for the parameters, and determination of the interim and final values of the parameters is performed by the compute nodes in the training groups rather than by the job server.

11. A non-transitory computer-readable storage medium storing executable computer program instructions for training a plurality of machine learning models, wherein each machine learning model comprises a set of parameters, wherein the computer program instructions, when executed by a computer, cause the computer to carry out a method according to any one of claims 1 to 10.

12. A computer system for training a plurality of machine learning models, wherein each machine learning model comprises a set of parameters, the computer system comprising:
a job server (110;500); and
a plurality of compute nodes (130;600) in communication with the job server;
wherein, the job server receives a plurality of training jobs, including a first training job and a second training job, for training the machine learning models; the job server allocates each training job to a respective training group (140) of or more compute nodes (130;600) based on current requirements of the training jobs and current status of the compute nodes; and
the job server determines which compute nodes are included in which training group;
wherein the training groups execute their allocated training jobs, said execution
comprising updating values for the parameters of the machine learning models; and **characterised in that**:
in response to determining that currently available computing nodes are insufficient to meet th requirements of the second training job, and for at least a first one of the plurality of training groups, the job server is operable to dynamically reallocate compute nodes currently allocated to and executing the first training job from the first training job to the second training job while the first training job is executing, in such a way to still meet a minimum required by said the first training job, while freeing up resources to meet a required minimum for said second training job; and
at least one of the training groups that comprises two or more compute nodes is configured to communicate the updated values of the parameters between said two or more compute nodes of said at least one of the training groups and to use the communicated updated values in furtherance of the respective training job.

13. The computer system of claim 12, further comprising:
a buffer node (450) in communication with the compute nodes, the buffer node buffering data to be used in a next training job to be executed by the compute nodes.

## Patentansprüche

1. Verfahren zum Trainieren mehrerer maschineller Lernmodelle in einem Computersystem, wobei jedes maschinelle Lernmodell einen Satz von Parametern umfasst, wobei das Verfahren Folgendes beinhaltet:
Empfangen, durch einen Jobserver (110; 500), der mit mehreren Rechenknoten (130; 600) über ein Netzwerk (120) kommuniziert, mehrerer Trainingsjobs, einschließlich eines ersten Trainingsjobs und eines zweiten Trainingsjobs, zum Trainieren der maschinellen Lernmodelle;
Zuweisen, durch den Jobserver, jedes Trainingsjobs zu einer jeweiligen Trainingsgruppe (140) eines oder mehrerer der genannten Rechenknoten (130; 600) auf der Basis von aktuellen Anforderungen der Trainingsjobs und des aktuellen Status der Rechenknoten, einschließlich des Bestimmens durch den Jobserver, welche Rechenknoten in welcher Trainingsgruppe enthalten sind; und
Ausführen, durch die Trainingsgruppen, der ihnen zugewiesenen Trainingsjobs, wobei das genannte Ausführen das Aktualisieren von Werten für die Parameter der maschinellen Lernmodelle beinhaltet;
wobei das Verfahren ferner **gekennzeichnet ist durch**:
dynamisches Neuzuweisen, **durch** den Jobserver, als Reaktion auf die Feststellung, dass gegenwärtig verfügbare Rechenknoten nicht ausreichen, um die Anforderungen des zweiten Trainingsjobs zu erfüllen, von gegenwärtig dem ersten Trainingsjob zugewiesenen und ihn ausführenden Rechenknoten vom ersten Trainingsjob dem zweiten Trainingsjob während der Ausführung des ersten Trainingsjobs auf eine solche Weise, dass ein von dem genannten ersten Trainingsjob benötigtes Minimum weiterhin erfüllt wird, während Ressourcen freigegeben werden, um ein erforderliches Minimum für den genantnen zweiten Trainingsjob zu erfüllen; und
Übermitteln, **durch** mindestens eine der Trainingsgruppen, die zwei oder mehr Rechenknoten umfasst, der aktualisierten Werte der Parameter zwischen den genannten zwei oder mehr Rechenknoten der genannten mindestens einen der Trainingsgruppen; und
wobei die genannte mindestens eine der Trainingsgruppen die übermittelten aktualisierten Werte zur Unterstützung des jeweiligen Trainingsjobs verwendet.

2. Verfahren nach Anspruch 1, wobei das Computersystem eine Master-Worker-Architektur aufweist,
wobei der Jobserver als Master für jede der Trainingsgruppen arbeitet und jede Trainingsgruppe als Worker für den Jobserver arbeitet.

3. Verfahren nach Anspruch 2, wobei mindestens eine der Trainingsgruppen mit zwei oder mehr Rechenknoten auch eine Master-Worker-Architektur innerhalb der Trainingsgruppe aufweist, wobei einer der Rechenknoten in der Trainingsgruppe als Master für einen Rest der Rechenknoten in der Trainingsgruppe arbeitet und der Rest der Rechenknoten als Worker für den einen Rechenknoten arbeitet.

4. Verfahren nach Anspruch 2, wobei mindestens eine der Trainingsgruppen mit zwei oder mehr Rechenknoten eine Peer-to-Peer-Architektur innerhalb der Trainingsgruppe aufweist.

5. Verfahren nach Anspruch 2, wobei für mindestens eine der Trainingsgruppen mit zwei oder mehr Rechenknoten: der Trainingsjob mit Anfangswerten für die Parameter beginnt und mit Endwerten für die Parameter endet, und die Aktualisierung der Parameter von den Anfangswerten auf die Endwerte von einem der Rechenknoten in der Trainingsgruppe durchgeführt und gespeichert wird.

6. Verfahren nach Anspruch 1, das ferner Folgendes beinhaltet:
Ändern, durch den Jobserver, welche Rechenknoten in welcher Trainingsgruppe enthalten sind, auf der Basis der aktuellen Anforderungen der Trainingsjobs und des aktuellen Status der Rechenknoten.

7. Verfahren nach Anspruch 1, wobei das Zuweisen der Trainingsjobs zu Trainingsgruppen auf der Basis des aktuellen Status der Rechenknoten das Zuweisen der Trainingsjobs zu Trainingsgruppen auf der Basis der aktuellen Fähigkeit der Rechenknoten und der aktuellen Verfügbarkeit der Rechenknoten beinhaltet.

8. Verfahren nach Anspruch 1, wobei der Jobserver die Trainingsjobs Trainingsgruppen auf der Basis von einem oder mehreren aus Rechenkapazität, Verfügbarkeit der Rechenknoten, Datenspeicherfähigkeit, Verfügbarkeit der Rechenknoten und Kommunikationsfähigkeit zuweist.

9. Verfahren nach Anspruch 1, wobei der Jobserver für die mindestens eine Trainingsgruppe die Übermittlungen der aktualisierten Werte zwischen Rechenknoten spezifiziert.

10. Verfahren nach Anspruch 1, wobei die Trainingsjobs mit Anfangswerten für die Parameter beginnen, durch Zwischenwerte der Parameter fortschreiten und mit Endwerten für die Parameter enden, und das Bestimmen der Zwischen- und Endwerte der Parameter durch die Rechenknoten in den Trainingsgruppen anstatt durch den Jobserver durchgeführt wird.

11. Nichtflüchtiges computerlesbares Speichermedium, das ausführbare Computerprogrammbefehle zum Trainieren mehrerer maschineller Lernmodelle speichert, wobei jedes maschinelle Lernmodell einen Satz von Parametern umfasst, wobei die Computerprogrammbefehle bei Ausführung durch einen Computer bewirken, dass der Computer ein Verfahren nach einem der Ansprüche 1 bis 10 ausführt.

12. Computersystem zum Trainieren mehrerer maschineller Lernmodelle, wobei jedes maschinelle Lernmodell einen Satz von Parametern umfasst, wobei das Computersystem Folgendes umfasst:
einen Jobserver (110; 500); und
mehrere Rechenknoten (130; 600), die mit dem Jobserver kommunizieren;
wobei der Jobserver mehrere Trainingsjobs, einschließlich eines ersten Trainingsjobs und eines zweiten Trainingsjobs, zum Trainieren der maschinellen Lernmodelle empfängt; der Jobserver jeden Trainingsjob einer jeweiligen Trainingsgruppe (140) von einem oder mehreren Rechenknoten (130; 600) auf der Basis der aktuellen Anforderungen der Trainingsjobs und des aktuellen Status der Rechenknoten zuweist; und
der Jobserver bestimmt, welche Rechenknoten in welcher Trainingsgruppe enthalten sind;
wobei die Trainingsgruppen die ihnen zugewiesenen Trainingsjobs ausführen, wobei das genannte Ausführen das Aktualisieren von Werten für die Parameter der maschinellen Lernmodelle umfasst; und **dadurch gekennzeichnet, dass**:
als Reaktion auf die Feststellung, dass gegenwärtig verfügbare Rechenknoten nicht ausreichen, um die Anforderungen des zweiten Trainingsjobs zu erfüllen, und für mindestens eine erste der mehreren Trainingsgruppen, der Jobserver die Aufgabe hat, gegenwärtig dem ersten Trainingsjob zugewiesene und ihn ausführende Rechenknoten dynamisch vom ersten Trainingsjob dem zweiten Trainingsjob während der Ausführung des ersten Trainingsjob auf eine solche Weise neu zuzuweisen, dass ein vom ersten Trainingsjob benötigtes Minimum weiterhin erfüllt wird, während Ressourcen freigegeben werden, um ein erforderliches Minimum für den genannten zweiten Trainingsjob zu erfüllen; und
mindestens eine der Trainingsgruppen, die zwei oder mehr Rechenknoten umfasst, zum Übermitteln der aktualisierten Werte der Parameter zwischen den genannten zwei oder mehr Rechenknoten der genannten mindestens einen der Trainingsgruppen und zum Verwenden der übermittelten aktualisierten Werte zur Unterstützung des jeweiligen Trainingsjob konfiguriert ist.

13. Computersystem nach Anspruch 12, das ferner Folgendes umfasst:
einen Pufferknoten (450), der mit den Rechenknoten kommuniziert, wobei der Pufferknoten Daten puffert, die in einem nächsten, von den Rechenknoten auszuführenden Trainingsjob verwendet werden sollen.

## Revendications

1. Un procédé d'entraînement d'une pluralité de modèles d'apprentissage automatique dans un système informatique, où chaque modèle d'apprentissage automatique comprend un ensemble de paramètres, le procédé comprenant :
la réception, par un serveur de tâches (110; 500) en communication avec une pluralité de nœuds de calcul (130; 600) par l'intermédiaire d'un réseau (120), d'un pluralité de tâches d'entraînement, comprenant une première tâche d'entraînement et une deuxième tâche d'entraînement, destinées à l'entraînement des modèles d'apprentissage automatique,
l'attribution, par le serveur de tâches, de chaque tâche d'entraînement à un groupe d'entraînement respectif (140) d'un ou de plusieurs desdits nœuds de calcul (130; 600) en fonction d'exigences actuelles des tâches d'entraînement et d'un état actuel des nœuds de calcul, comprenant la détermination par le serveur de tâches de quels nœuds de calcul sont inclus dans quel groupe d'entraînement, et
l'exécution, par les groupes d'entraînement, de leurs tâches d'entraînement attribuées, ladite exécution comprenant l'actualisation de valeurs pour les paramètres des modèles d'apprentissage automatique,
le procédé étant **caractérisé en outre par** :
en réponse à la détermination que des nœuds de calcul actuellement disponibles sont insuffisants pour satisfaire les exigences de la deuxième tâche d'entraînement, la réattribution dynamique, par le serveur de tâches, de nœuds de calcul actuellement attribués à, et exécutant, la première tâche d'entraînement, de la première tâche d'entraînement vers la deuxième tâche d'entraînement pendant que la première tâche d'entraînement est exécutée, de façon à toujours satisfaire un minimum requis par ladite première tâche d'entraînement, tout en libérant des ressources de façon à satisfaire un minimum requis pour ladite deuxième tâche d'entraînement, et
la communication, par au moins un des groupes d'entraînement qui comprend deux ou plus nœuds de calcul, des valeurs actualisées des paramètres entre lesdits deux ou plus nœuds de calcul dudit au moins un des groupes d'entraînement, et
l'utilisation par ledit au moins un des groupes d'entraînement des valeurs actualisées communiquées aux fins de l'exécution de la tâche d'entraînement respective.

2. Le procédé selon la Revendication 1, où le système informatique possède une architecture de maître-employé, où le serveur de tâches fonctionne en tant que maître pour chacun des groupes d'entraînement et chaque groupe d'entraînement fonctionne en tant qu'employé pour le serveur de tâches.

3. Le procédé selon la Revendication 2, où au moins un des groupes d'entraînement avec deux ou plus nœuds de calcul possède également une architecture de maître-employé à l'intérieur du groupe d'entraînement, où un des nœuds de calcul dans le groupe d'entraînement fonctionne en tant que maître pour une partie restante des nœuds de calcul dans le groupe d'entraînement et les nœuds de calcul restants des nœuds de calcul fonctionnent en tant qu'employés pour ledit nœud de calcul.

4. Le procédé selon la Revendication 2, où au moins un des groupes d'entraînement avec deux ou plus nœuds de calcul possède une architecture d'homologue à homologue à l'intérieur du groupe d'entraînement.

5. Le procédé selon la Revendication 2, où pour au moins un des groupes d'entraînement avec deux ou plus nœuds de calcul : la tâche d'entraînement débute avec des valeurs initiales pour les paramètres et se termine avec des valeurs finales pour les paramètres, et l'actualisation des paramètres des valeurs initiales vers les valeurs finales est exécutée et conservée en mémoire par un des nœuds de calcul dans le groupe d'entraînement.

6. Le procédé selon la Revendication 1, comprenant en outre :
la modification par le serveur de tâches de quels nœuds de calcul sont inclus dans quel groupe d'entraînement en fonction d'exigences actuelles des tâches d'entraînement et d'un état actuel des nœuds de calcul.

7. Le procédé selon la Revendication 1, où l'attribution des tâches d'entraînement à des groupes d'entraînement en fonction d'un état actuel des nœuds de calcul comprend l'attribution des tâches d'entraînement à des groupes d'entraînement en fonction d'une capacité actuelle des nœuds de calcul et d'une disponibilité actuelle des nœuds de calcul.

8. Le procédé selon la Revendication 1, où le serveur de tâches attribue les tâches d'entraînement à des groupes d'entraînement en fonction d'un ou plusieurs éléments parmi : une capacité de calcul, une disponibilité des nœuds de calcul, une capacité de stockage de données, une disponibilité des nœuds de calcul et une capacité de communication.

9. Le procédé selon la Revendication 1, où, pour le au moins un groupe d'entraînement, le serveur de tâches spécifie les communications des valeurs actualisées entre des nœuds de calcul.

10. Le procédé selon la Revendication 1, où les tâches d'entraînement débutent avec des valeurs initiales pour les paramètres, progressent au fil de valeurs intermédiaires des paramètres et se terminent avec des valeurs finales pour les paramètres, et la détermination des valeurs intermédiaires et finales des paramètres est exécutée par les nœuds de calcul dans les groupes d'entraînement de préférence au serveur de tâches.

11. Un support à mémoire lisible par ordinateur non transitoire conservant en mémoire des instructions de programme informatique exécutables destinées à l'entraînement d'une pluralité de modèles d'apprentissage automatique, où chaque modèle d'apprentissage automatique comprend un ensemble de paramètres, où les instructions de programme informatique, lorsqu'elles sont exécutées par un ordinateur, amènent l'ordinateur à exécuter un procédé selon l'une quelconque des Revendications 1 à 10.

12. Un système informatique d'entraînement d'une pluralité de modèles d'apprentissage automatique, où chaque modèle d'apprentissage automatique comprend un ensemble de paramètres, le système informatique comprenant :
un serveur de tâches (110; 500), et
une pluralité de nœuds de calcul (130; 600) en communication avec le serveur de tâches,
où le serveur de tâches reçoit un pluralité de tâches d'entraînement, comprenant une première tâche d'entraînement et une deuxième tâche d'entraînement, destinées à l'entraînement des modèles d'apprentissage automatique, le serveur de tâches attribue chaque tâche d'entraînement à un groupe d'entraînement respectif (140) d'un ou plusieurs nœuds de calcul (130; 600) en fonction d'exigences actuelles des tâches d'entraînement et d'un état actuel des nœuds de calcul, et
le serveur de tâches détermine quels nœuds de calcul sont inclus dans quel groupe d'entraînement,
où les groupes d'entraînement exécutent leurs tâches d'entraînement attribuées, ladite exécution comprenant l'actualisation de valeurs pour les paramètres des modèles d'apprentissage automatique, et
**caractérisé en ce que** :
en réponse à la détermination que des nœuds de calcul actuellement disponibles sont insuffisants pour satisfaire les exigences de la deuxième tâche d'entraînement, et pour au moins un premier groupe d'entraînement de la pluralité de groupes d'entraînement, le serveur de tâches est conçu de façon à réattribuer dynamiquement des nœuds de calcul actuellement attribués à, et exécutant, la première tâche d'entraînement de la première tâche d'entraînement vers la deuxième tâche d'entraînement pendant que la première tâche d'entraînement est exécutée, de façon à toujours satisfaire un minimum requis par ladite première tâche d'entraînement, tout en libérant des ressources de façon à satisfaire un minimum requis pour ladite deuxième tâche d'entraînement, et
au moins un des groupes d'entraînement qui comprend deux ou plus nœuds de calcul est configuré de façon à communiquer les valeurs actualisées des paramètres entre lesdits deux ou plus nœuds de calcul dudit au moins un des groupes d'entraînement et à utiliser les valeurs actualisées communiquées aux fins de l'exécution de la tâche d'entraînement respective.

13. Le système informatique selon la Revendication 12, comprenant en outre :
un nœud de mémoire tampon (450) en communication avec les nœuds de calcul, le nœud de mémoire tampon plaçant en mémoire tampon des données à utiliser dans une tâche d'entraînement suivante destinée à être exécutée par les nœuds de calcul.
